# EUROPÄISCHE PATENTSCHRIFT

(11) **EP 0 499 065 B1**
(45) Veröffentlichungstag und Bekanntmachung des Hinweises auf die Patenterteilung: **28.05.1997**
(21) Anmeldenummer: 92101057.5
(22) Anmeldetag: 23.01.1992
(51) Int. Cl.: H04B 10/20, H04B 10/16

(54) **Optisches Nachrichtenübertragungssystem für den Teilnehmeranschlussbereich mit optischen Verstärkern**
Optical transmission system for the subscriber connection area with optical amplifiers
Système de transmission optique pour zone d'abonnés utilisant des amplificateurs optiques

(30) Priorität: 11.02.1991 DE 4104084; 22.05.1991 DE 4116660
(43) Veröffentlichungstag der Anmeldung: 19.08.1992
(73) Patentinhaber: Alcatel SEL Aktiengesellschaft, D-70435 Stuttgart (DE)
(72) Erfinder: Ohnsorge, Horst, Dr., W-7141 Freiberg (DE); Heidemann, Rolf, Dr., W-7146 Tamm (DE); Weygang, Adolf, W-7000 Stuttgart 31 (DE)
(74) Vertreter: Pohl, Herbert, Dipl.-Ing.

(56) Entgegenhaltungen:
- FUNKSCHAU Nr. 3, 25. Januar 1991, München, DE, SS. 59-62; MIKI: 'Fibre to the Home: Strategien in Japan'
- IEEE GLOBAL TELECOMMUNICATIONS CONFERENCE November 1989, DALLAS, US, SS. 1671-1674; ROSHER et al.: 'A new approach to the provision of POTS and CATV over passive optical networks'
- ELECTRONICS LETTERS, Bd. 27, Nr. 1, 3. Januar 1991, STEVENAGE, GB, SS. 89-91; SUYAMA et al.: 'Bidirectional transmission scheme using intensity modulation of 1.48um pump laser diode for erbium-doped fibre amplifier'
- IEEE TECHNICAL DIGEST ON OPTICAL AMPLIFIERS AND THEIR APPLICATIONS August 1990, MONTEREY, US, SS. 232-235; KIKUSHIMA et al.: 'Simultaneous distribution of AM/FM FDM TV signals to 65536 subscribers using 4 stage cascade EDFAs'

## Beschreibung

Die Erfindung betrifft ein optisches Nachrichtenübertragungssystem nach dem Oberbegriff des Patentanspruchs 1. Ein derartiges System ist bekannt aus: IEEE Technical Digest on Optical Amplifiers and their Applications, Monterey, August 1990, Seiten 232 bis 235 (WB1). Das dort beschriebene System ist ein reines Verteilsystem für Fernsehsignale. Eine große Anzahl von Teilnehmern ist über ein Lichtwellenleiternetz mit Stern-Stern-Struktur mit einer Fernseh-Zentrale verbunden, und zwischen aufeinanderfolgenden Verzweigungspunkten des Lichtwellenleiternetzes sind faseroptische Verstärker vorhanden, von denen jeder aus einem Erbium-dotierten Faserstück und einer Pumplicht-Quelle besteht. Ein Frequenzband, das die zu übertragenden Fernsehsignale enthält, wird in ein optisches Signal mit einer Wellenlänge von 1552 nm umgesetzt, und das optische Signal wird über das Lichtwellenleiternetz zu den Teilnehmern übertragen, wobei es in den faseroptischen Verstärkern verstärkt wird.

In vielen Anwendungsfällen besteht die zusätzliche Forderung, neben den Fernsehsignalen auch Signale von bidirektionalen Diensten (Dialogdiensten), wie z.B. den Diensten des Fernsprechens und der Datenübertragung, zwischen der Zentrale und den Teilnehmern und umgekehrt zu übertragen.

Ein optisches Nachrichtenübertragungssystem, das zwischen einer Zentrale und Teilnehmern nicht nur Fernsehsignale, sondern auch Signale von bidirektionalen Diensten übertragen kann, ist aus der DE-A1 39 07 495 bekannt. Dort ist die Zentrale über einen Lichtwellenleiter mit einer Vorfeldeinrichtung verbunden, die einen Sternkoppler enthält, von dem teilnehmerindividuelle Lichtwellenleiter zu einer Gruppe von Teilnehmern führen. Die von der Zentrale zu den Teilnehmern zu übertragenden Signale werden als ein Frequenzband in ein optisches Signal mit einer ersten Wellenlänge umgesetzt, und dieses optische Signal wird zu den Teilnehmern übertragen. Die von den Teilnehmern zur Zentrale zu übertragenden Signale werden in Signale mit teilnehmerindividuellen Frequenzen umgesetzt, und diese werden als optische Signale mit einer zweiten Wellenlänge über den Sternkoppler bis zur Zentrale übertragen. Die Anzahl der mit einem solchen optischen Übertragungssystem zu versorgenden Teilnehmer ist bei einem solchen System auf eine relativ geringe Anzahl begrenzt, auch wenn, wie es dort erwähnt ist, bei den Sternkopplern optische Verstärker vorhanden sind.

Es ist daher die Aufgabe der Erfindung, ein für eine größere Anzahl von Teilnehmern geeignetes optisches Nachrichtenübertragungssystem der eingangs genannten Art anzugeben.

Die Aufgabe wird wie in Patentanspruch 1 angegeben gelöst. Weiterbildungen sind den Unteransprüchen entnehmbar.

Die Erfindung wird nun anhand der Zeichnungen in Beispielen näher erläutert. Es zeigen:
- Fig. 1: den Grundaufbau des erfindungsgemäßen Systems,
- Fig. 2: die bei einem Teilnehmer des Systems nach Fig. 1 vorhandenen Einrichtungen im Blockschaltbild,
- Fig. 3: einen ersten Frequenzplan für die für die Signalübertragung nach dem erfindungsgemäßen System verwendeten Frequenzen der Signale,
- Fig. 4: eine zweite Ausführungsform der Verstärkerstelle A aus Fig. 1,
- Fig. 5: eine dritte Ausführungsform der Verstärkerstelle A aus Fig. 1.
- Fig. 6: ein Ausführungsbeispiel von in der Zentrale vorhandenen Einrichtungen zur dynamischen Zuteilung der Frequenzen zu den Teilnehmern,
- Fig. 7: ein Ausführungsbeispiel von bei einem Teilnehmer vorhandenen Einrichtungen zur dynamischen Zuteilung der Frequenzen zu dem Teilnehmer, und
- Fig. 8: einen zweiten Frequenzplan für die zur Signalübertragung nach dem erfindungsgemäßen System verwendeten Frequenzen der Signale.

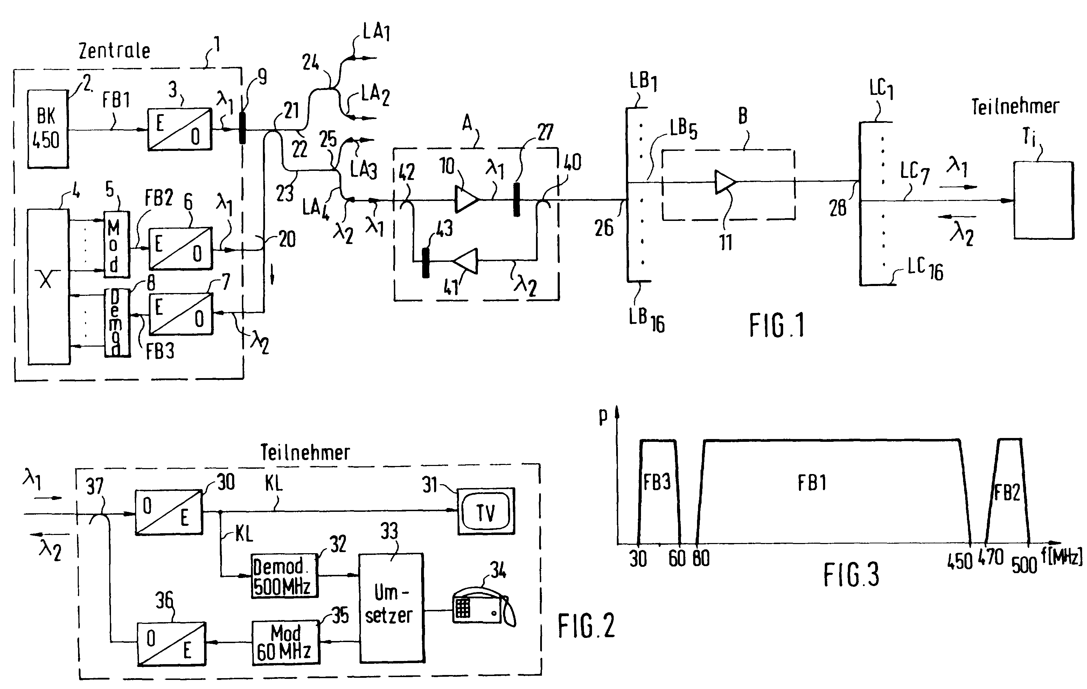

In Fig. 1 ist im linken Teil die genannte Zentrale gezeigt und mit dem Bezugszeichen 1 bezeichnet. Sie enthält eine sogenannte KTV-Kopfstation (KTV = Kabelfernsehen), die mit dem Bezugszeichen 2 bezeichnet ist. Die KTV-Kopfstation 2 liefert an ihrem Ausgang ein Frequenzmultiplexsignal mit einer Bandbreite von 80 bis 450 MHz, z.B. ein Frequenzband für Fernseh- und Hörfunkübertragung ähnlich dem Koaxial-KTV-System BK 450 der Deutschen Bundespost. Dieses Frequenzmultiplexsignal wird jedoch nicht wie üblich über Koaxialleitungen zu den Teilnehmern verteilt, sondern über das erfindungsgemäße optische Nachrichtenübertragungssystem. Im Frequenzplan der Fig. 3 ist das Frequenzband, das das KTV-Frequenzmultiplexsignal belegt, mit FB1 bezeichnet, und daher ist auch in Fig. 1 die vom Ausgang der KTV-Kopfstation 2 weiterführende Leitung, die eine Koaxial-Leitung ist, mit FB1 bezeichnet.

Sie gibt das genannte KTV-Frequenzmultiplexsignal in einen Elektrisch-Optisch-Wandler 3 ein, der es in ein optisches Signal umsetzt, indem er es zur Intensitätsmodulation seines Ausgangslichts der Wellenlänge (λ₁), vorzugsweise 1550 nm, verwendet. Im Weg des optischen Signals befindet sich ein optischer Isolator 9 zum Schutz des Wandlers 3 vor Reflexionen des in Abwärtsrichtung zu übertragenden optischen Signals an irgendwelchen Übertragungseinrichtungen, z.B. im faseroptischen Verstärker 10.

Das optische Ausgangssignal des Wandlers 3 wird ähnlich wie beim eingangs genannten Verteilsystem über das noch zu beschreibende Lichtwellenleiternetz zu einer großen Anzahl von Teilnehmern, von denen stellvertretend ein einziger dargestellt und mit Tᵢ bezeichnet ist, übertragen und dabei durch faseroptische Verstärker 10 und 11, die sich zwischen aufeinanderfolgenden Verzweigungspunkten des Lichtwellenleiternetzes befinden, verstärkt.

Die von der Zentrale 1 zu den Teilnehmern zu übertragenden teilnehmerindividuellen Nachrichtensignale stammen von einer in der Zentrale befindlichen Ortsvermittlungsstelle 4, an die die betrachteten Teilnehmer über das Lichtwellenleiternetz angeschlossen sind. Im gezeigten Ausführungsgbeispiel beträgt die Anzahl der an eine Ortsvermittlungsstelle angeschlossenen Teilnehmer 1024. Die Ortsvermittlungsstelle 4 gibt die zu diesen Teilnehmern zu übertragenden teilnehmerindividuellen Signale über 1024 parallele Ausgangsleitungen in eine Modulationseinrichtung 5 ein, die die große Anzahl von Signalen in ein Freqenzmultiplexsignal mit teilnehmerindividuellen Frequenzen umsetzt, das im Frequenzplan nach Fig. 3 ein Frequenzband FB2 belegt, das von etwa 470 bis etwa 500 MHz reicht. Das Frequenzband FB2 enthält 1024 Träger, die in einem Frequenzabstand von etwa 30 KHz auseinanderliegen und von denen jeder mit einem der teilnehmerindividuellen Nachrichtensignale frequenzmoduliert wird.

Das von der Modulationseinrichtung 5 erzeugte Frequenzmultiplexsignal mit dem Fequenzband FB2 gelangt über eine ebenso bezeichnete Leitung in einen Elektrisch-Optisch-Wandler 6, der es in ein optisches Signal mit der Wellenlänge λ₁ umsetzt, die gleich der Wellenlänge des Wandlers 3 ist. Dieses optische Signal wird über das zu erläuternde Lichtwellenleiternetz zu den Teilnehmern Tᵢ übertragen.

Von den Teilnehmern Tᵢ empfängt die Zentrale 1 ein Gemisch von optischen Signalen mit einer einzigen Wellenlänge λ₂, z.B. von 1300 nm, das bis zu 1024 elektrische Signale aus einem dritten Frequenzband FB3 enthält, das von etwa 30 bis 60 MHz (Frequenzplan nach Fig. 3) reicht. Diese elektrischen Signale sind teilnehmerindividuelle Träger, denen die von den Teilnehmern Tᵢ zur Zentrale, wie noch zu erläutern ist, zu übertragenden teilnehmerindividuellen Nachrichtensignale durch Frequenzmodulation aufmoduliert sind. Die Träger haben Trägerfrequenzen aus dem Frequenzband FB3 mit Frequenzabständen von etwa 30 kHz.

Das empfangene Gemisch von optischen Signalen mit der Wellenlänge λ₂ wird in einem Optisch-Elektrisch-Wandler 7 in ein elektrisches Frequenzmultiplexsignal mit dem Frequenzband FB3 umgesetzt und über eine ebenso bezeichnete Leitung in eine Demodulationseinrichtung 8 eingegeben, die die in ihm enthaltenen Signale demoduliert und über 1024 parallele Leitungen in die Ortsvermittlungsstelle 4 eingibt.

Von den gezeigten Ein- und Ausgangsleitungen der Ortsvermittlungsstelle 4 gehören somit jeweils 2 zu einem einzigen Teilnehmer. Für sie ist jeweils eine nicht gezeigte Umsetzer-Schaltung vorhanden, die die zwischen der Ortsvermittlungsstelle 4 und den modulierenden und demodulierenden Einrichtungen 5 bzw. 8 erforderlichen Signalumsetzungen vornimmt, z.B. die Umsetzung vom Zweidraht- auf den Vierdrahtbetrieb, und Umsetzungen von Ruf-, Wähl- und Signalisierzeichen.

Die genannten Anschlüsse der Zentrale 1 für optische Signale mit der Wellenlänge λ₁ und der Wellenlänge λ₂ sind wie folgt an das Lichtwellenleiternetz angeschlossen.

Die an den Ausgängen der Wandler 3 und 6 der Zentrale erscheinenden optischen Signale mit den gleichen Wellenlängen λ₁ werden mittels Lichtwellenleiter-Anschlußstücken und Lichtwellenleiter-Kopplern 20 und 21 zu einem einzigen optischen Signal zusammengefaßt, und der Lichtwellenleiter-Koppler 21 verteilt das durch die Zusammenfassung entstandene Signal auf zwei Lichtwellenleiter-Stücke 22 und 23, von denen es mittels Lichtwellenleiter-Kopplern 24 und 25 auf vier Lichtwellenleiter LA₁ bis LA₄ verteilt wird. Die Koppler 21, 24 und 25 sind 3dB-Koppler, der Koppler 20 ist ein wellenlängenselektiver Koppler. Über jeden dieser Lichtwellenleiter werden somit sowohl die Signale des KTV-Systems als auch die teilnehmerindividuellen Signale von der Zentrale zu Teilnehmern übertragen. Diese Übertragungsrichtung wird bei der nachfolgenden Erläuterung als die sogenannte Abwärtsrichtung bezeichnet, und die dazu entgegengesetzte Übertragungsrichtung als die sogenannte Aufwärtsrichtung. Die Zeichnung zeigt stellvertretend für die Lichtwellenleiter LA₁ bis LA₄ die Übertragung über den Lichtwellenleiter LA₄.

Der Lichtwellenleiter LA₄ führt vom Koppler 25, der ein Verzweigungspunkt eines Stern-Stern-förmigen Lichtwellenleiternetzes ist, zu einem nur schematisch angedeuteten Leistungsteiler 26, der wiederum ein Verzweigungspunkt des Lichtwellenleiternetzes ist, mit einer Anzahl von beispielsweise 16 weiterführenden Lichtleitern LB₁ bis LB₁₆. Infolge der in den Kopplern 21 und 25 stattgefundenen Signalverteilung ist der Pegel des über den Lichtwellenleiter LA₄ zu übertragenden optischen Signals so weit abgesunken, daß eine Verstärkung erforderlich ist, bevor es mittels des Leistungsteilers 26 auf 16 weiterführende Lichtwellenleiter verteilt werden kann. Hierzu dient der bereits erwähnte faseroptische Verstärker 10. Um ihn vor am Leistungsteiler 26 und am faseroptischen Verstärker 11 reflektierten optischen Signalen zu schützen, ist in den Lichtwellenleiter zwischen dem faseroptischen Verstärker 10 und dem Leistungsteiler 26 ein optischer Isolator 27 eingefügt. Der faseroptische Verstärker 10 und der optische Isolator 27 sind Teil einer optischen Verstärkerstelle A, zu der auch Mittel zum Verstärken der in Aufwärtsrichtung zu übertragenden optischen Signale gehören, falls an diesem Punkt des Lichtwellenleiternetzes solche Mittel erforderlich sind. Diese Mittel werden an späterer Stelle erläutert.

Die bisher beschriebenen Koppler, Leistungsteiler und Lichtwellenleiter LA₁ bis LA₄ einschließlich der in diese eingefügten Verstärkerstellen A sowie der vier Leistungsteiler 26 sind örtlich vorzugsweise nahe bei der Zentrale 1 angeordnet oder gehören zur Zentrale.

Von den vom Leistungsteiler 26 weiterführenden Lichtwellenleitern LB₁ bis LB₁₆ ist stellvertretend ein Lichtwellenleiter LB₅ gezeigt, der wie alle anderen nicht gezeigten zu einem weiteren Verzweigungspunkt des Lichtwellenleiternetzes, einem Leistungsteiler 28, führt. Dieser verteilt das in Abwärtsrichtung übertragene optische Signal auf beispielsweise 16 weiterführende Lichtwellenleiter LC₁ bis LC₁₆, von denen jeder zu einem Teilnehmer führt, wie es für einen repräsentativen Lichtwellenleiter LC₇ und einen Teilnehmer Tᵢ gezeigt ist. Die Leistungsteiler 26 und 28 werden im folgenden bisweilen auch als Koppler bezeichnet.

In den Lichtwellenleiter LB₅ ist, ebenso wie in die ihm entsprechenden anderen Lichtwellenleiter eine Verstärkerstelle B eingefügt, die den oben erwähnten faseroptischen Verstärker 11 zum Verstärken des in Abwärtsrichtung übertragenen optischen Signals enthält. Ein optischer Isolator zum Schutz des faseroptischen Verstärkers 11 ist in dem Teil des Lichtwellenleiternetzes, in dem dieser eingesetzt ist, nicht erforderlich, da der Koppler 28 und die Einrichtungen des Teilnehmers so angelegt werden können, daß nur sehr wenig Reflexionen auftreten.

Unter bestimmten Betriebsbedingungen kann auf den optischen Isolator 27 in der Verstärkerstelle A auch noch verzichtet werden.

Die bei einem Teilnehmer Tᵢ, der für die Vielzahl der über das beschriebene Netz an die Zentrale angeschlossenen Teilnehmer repräsentativ ist, vorhandenen Einrichtungen werden nun anhand der Figur 2 erläutert. Das optische Signal, das der Teilnehmer über den ihn mit dem Knoten 28 verbindenden Lichtwellenleiter empfängt, wird in einem Optisch-Elektrisch-Wandler 30 in ein elektrisches Frequenzmultplexsignal umgesetzt, das die in Fig. 3 gezeigten Frequenzbänder FB₁ für die KTV-Signale und FB₂ für die teilnehmerindividuellen Signale enthält. Dieses Frequenzmultiplexsignal wird über eine elektrische Koaxialleitung, mit KL bezeichnet, in die bei einem Teilnehmer üblicherweise vorhandene Kabelfernseh-Hausverkabelung eingegeben und über diese zu einem oder mehreren Fernseh-Empfangsgeräten 31 übertragen. In diese Koaxialleitung kann ein das KTV-Band FB₁ durchlassendes Bandpaßfilter eingefügt sein, so daß an seinem Ausgang ein normgerechtes KTV-Signal ausgegeben wird. Dessen Ausgang kann dann als Übergabepunkt, d.h. als Schnittstelle zwischen der Zuständigkeit des Netzbetreibers und der des Teilnehmers, angesehen werden.

Damit der Teilnehmer das für ihn bestimmte Signal unter den im Frequenzband FB₂ enthaltenen teilnehmerindividuellen Signalen empfangen kann, wird das elektrische Ausgangssignal des Wandlers 30 über eine Koaxialleitung einem Demodulator 32 zugeführt. Dieser ist auf die dem Teilnehmer individuell zugeteilte Trägerfrequenz, z.B. auf 500 MHz, abgestimmt, so daß der Teilnehmer das für ihn bestimmte Signal und nur dieses aus der Gesamtheit der über das beschriebene Netz zu Teilnehmern übertragenen teilnehmerindividuellen Signale entnehmen kann. Am Ausgang des Demodulators 32 erscheint also in Basisbandlage das für den Teilnehmer bestimmte Signal, z.B. ein Fernsprechsignal, das über einen Umsetzer an eine übliche Endeinrichtung, z.B. einen Fernsprechapparat eingegeben wird.

Zum Übertragen eines Fernsprech- oder Datensignals vom Teilnehmer zur Zentrale hat der Teilnehmer einen Modulator 35, der das ihm vom Ausgang des Umsetzers 33, an den das Endgerät 34 angeschlossen ist, eingegebene Signal in die dem Teilnehmer individuelle zugeordnete Frequenzlage umsetzt, indem er einen bestimmten Träger aus dem Frequenzband FB₃, z.B. einen Träger mit 60 MHz, frequenzmoduliert. Weiterhin hat er einen Elektrisch-Optisch-Wandler 36 zum Umsetzen des durch die Modulation entstandenen elektrischen Signals in ein optisches Signal mit einer Wellenlänge λ₂ und einen Lichtwellenleiter-Koppler 37, der das optische Signal mit der Wellenlänge λ₂ in den zwischen den Koppler 28 und dem Teilnehmer verlaufenden Lichtwellenleiter einkoppelt. Der Koppler ist ein wellenlängenselektiver Koppler, der Licht mit der Wellenlänge λ₁ praktisch nur zum Eingang des Wandlers 30 und Licht mit der Wellenlänge λ₂ vom Ausgang des Wandlers 36 nur in Richtung zum Koppler 28 und praktisch nicht in Richtung zum Eingang des Wandlers 30 koppelt. Die Wellenlänge λ₂ beträgt vorzugsweise 1300 nm, was für die Übertragung zur Zentrale, wie noch zu erläutern ist, ein vorteilhafter Wert ist.

Der Umsetzer 33 besorgt die zur erfindungsgemäßen Übertragung der Signale von und zu den Standard-Endeinrichtungen erforderlichen Signalumsetzungen, z.B. eine Zweidraht-Vierdraht-Umsetzung und die Umsetzung von Ruf-, Wähl- und Signalisierzeichen, so daß sein mit der Endeinrichtung 34 verbundener Anschluß als Schnittstelle zu betrachten ist, an der standardmäßige Signale für das angeschlossene Endgerät vorhanden sind.

Bei dem beschriebenen System kann ein Teilnehmer so viel Fernsprech- oder Datenendeinrichtungen haben, wie ihm Frequenzen aus den Frequenzbändern FB₂ und FB₃ individuell zugeteilt werden können, also mehr als ein Fernsprech- oder Datenendgerät, wenn in den genannten Frequenzbändern mehr Trägerfrequenzen bereitgestellt werden können als Teilnehmer vorhanden sind.

Im folgenden wird erläutert, wie die von der großen Anzahl von Teilnehmern in Aufwärtsrichtung zur Zentrale zu übertragenden optischen Signale, die alle die gleiche Wellenlänge λ₂ haben, übertragen werden. Prinzipiell wird dasselbe Lichtwellenleiternetz wie für die oben beschriebene Signalübertragung in Abwärtsrichtung verwendet.

Auf den Lichtwellenleitern LC₁ bis LC₁₆ zwischen den Teilnehmern und dem Koppler 28 ist eine Verstärkung des optischen Signals mit der Wellenlänge λ₂ nicht erforderlich.

Der Koppler 28 dämpft zwar jedes der in Aufwärtsrichtung zu übertragenden optischen Signale, da er grundsätzlich die in Aufwärtsrichtung zu übertragenden Signale entsprechend seinem Teilerverhältnis in gleicher Weise dämpft wie die in Abwärtsrichtung zu übertragenden Signale. Trotzdem ist, wie Berechnungen gezeigt haben, eine Verstärkung der optischen Signale in Aufwärtsrichtung auch zwischen dem Koppler 28 und dem Koppler 26 nicht erforderlich, sondern wird erst erforderlich, nachdem die optischen Signale aus dem Koppler 26 in den Lichtwellenleiter LA₄ übergetreten sind. Daher ist an der Stelle des Verstärkers B, wie die Figur zeigt, eine Verstärkung des in Aufwärtsrichtung zu übertragenden Signals nicht vorgesehen, sondern nur an der Stelle des Verstärkers A sind solche Mittel vorhanden, die an späterer Stelle erläutert werden. Bei größeren Teilerverhältnissen am Koppler 28 kann allerdings auch an der Stelle des Verstärkers B eine Verstärkung in Aufwärtsrichtung wie an der Stelle des Verstärkers A vorgesehen werden.

Verstärkt in der Verstärkerstelle A, werden die in Aufwärtsrichtung zu übertragenden optischen Signale, alle mit der Wellenlänge λ₂, über die Koppler 25 (oder 24), 21, und 20 dem oben beschriebenen Wandler 7 in der Zentrale zugeführt. Wie oben beschrieben, sorgt eine Demodulationseinrichtung 8 dafür, daß jeder teilnehmerindividuellen Eingangsleitung der Ortsvermittlungsstelle 4 genau das für sie bestimmte Signal von den teilnehmerindividuellen Signalen zugeführt wird.

Die Wellenlänge λ₂ der in Aufwärtsrichtung zu übertragenden optischen Signale wird so gewählt, daß sie günstig ist für die Komponenten des Systems, welche die Signale zu durchlaufen haben. Optische Signale mit einer Wellenlänge von 1300 nm werden in einem faseroptischen Verstärker, der für 1550 nm ausgelegt ist und wie er heutzutage bekannt ist, praktisch nicht gedämpft. Deshalb und weil bei der Wellenlänge von 1300 nm die standardisierten Lichtwellenleiter günstige Übertragungseigenschaften haben und für diese Wellenlänge auch handelsübliche optische Sender und Empfänger zur Verfügung stehen, wird vorzugsweise λ₂ gleich 1300 nm gewählt.

Bei einer Wellenlänge von 800 nm stünden zwar billigere optische Sender und Empfänger zur Verfügung, jedoch wäre die Dämpfung von Licht mit der Wellenlänge λ₂ = 800 nm in der Verstärkerstelle B ein erhebliches Problem, da das für einen faseroptischen Verstärker typische Er-dotierte Faserstück bei 800 nm stark absorbiert.

Wie erwähnt, ist im Streckenabschnitt LA₄, d.h. an der Verstärkerstelle A, eine Verstärkung der in Aufwärtsrichtung zu übertragenden optischen Signale erforderlich. Die optische Verstärkung der in Aufwärtsrichtung übertragenen 1300 nm-Signale kann z.B. durch Mittel, wie sie in Fig. 1 gezeigt sind, bewerkstelligt werden. Zu diesen Mitteln gehört ein wellenlängenselektiver Lichtwellenleiter-Koppler 40, der das 1300λnm-Signal aus dem Lichtwellenleiter LA₄ auskoppelt, ein für 1300 nm optimierter faseroptischer Verstärker 41, dessen verstärktes Ausgangssignal ein zweiter wellenlängenselektiver Koppler 42 zur weiteren Übertragung in Aufwärtsrichtung in den Lichtwellenleiter LA₄ einkoppelt. Falls erforderlich, kann zwischen dem letzteren und dem Ausgang des faseroptischen Verstärkers 41 ein optischer Isolator 43 vorhanden sein, um den faseroptischen Verstärker vor reflektierten Signalen zu schützen. An Stelle des faseroptischen Verstärkers 41 kann auch ein optischer Halbleiter-Verstärker verwendet werden.

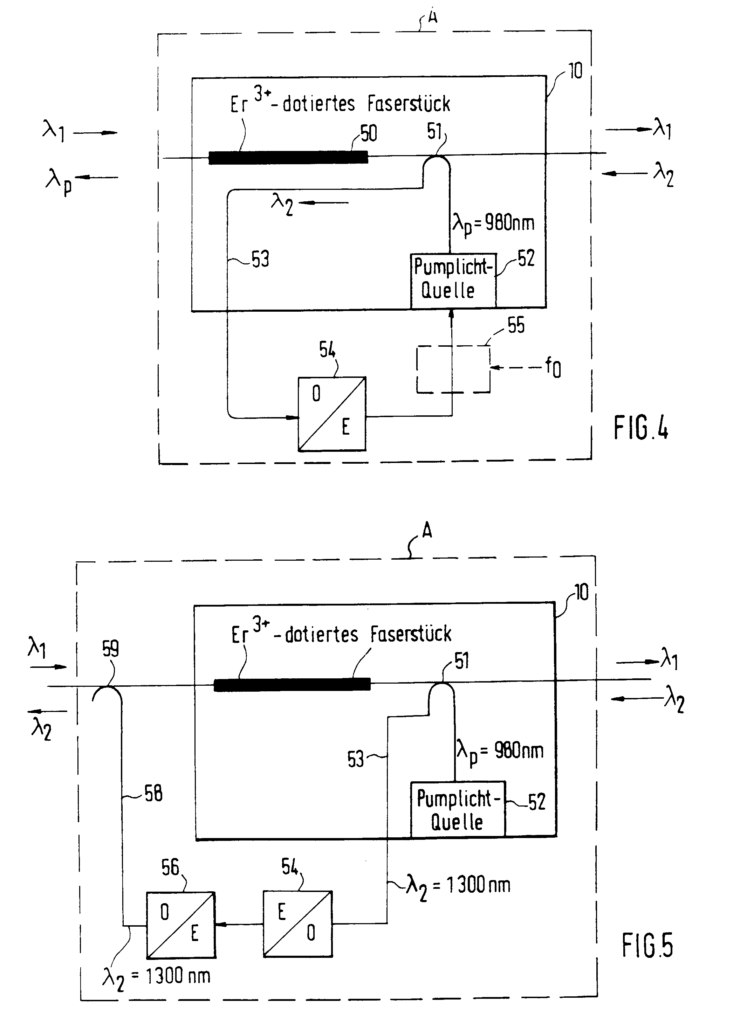

An Stelle der in Fig. 1 gezeigten Mittel zum Verstärken der in Aufwärtsrichtung zu übertragenden Signale in einer Verstärkerstelle A sind solche Mittel einsetzbar, wie sie anhand von Fig. 4 nachstehend erläutert werden.

Fig. 4 zeigt eine Verstärkerstelle A in einer anderen Ausgestaltung als der in Fig. 1 dargestellten. Wie jene enthält auch die nach Fig. 4 einen an sich bekannten faseroptischen Verstärker 10, der wie üblich besteht aus einem Er³⁺-dotierten Faserstück 50, einem wellenlängenselektiven faseroptischen Koppler 51 und einer Pumplicht-Quelle 52. Als Koppler 51 ist ein solcher wellenlängenselektiver faseroptischer Koppler zu verwenden, der die Eigenschaft hat, das vom Eingang des faseroptischen Verstärkers 10 zu seinem Ausgang gelangende optische Signal mit der Wellenlänge λ₁ möglichst ungedämpft an seinem zum Ausgang des faseroptischen Verstärkers 10 führenden Kopplerausgang auszugeben und das von der Pumplicht-Quelle 52 erzeugte Pumplicht mit der Wellenlänge λₚ von 980 nm von seinem mit dieser verbundenen Kopplereingang möglichst verlustfrei in Richtung zum dotierten Faserstück 50 auszugeben.

Erfindungsgemäß wird nun das in Aufwärtsrichtung zu übertragende optische Signal mit der Wellenlänge λ₂ (1300 nm) aus dem Lichtwellenleiter ausgekoppelt, verstärkt und in Aufwärtsrichtung weiter übertragen. Der bei den an sich bekannten faseroptischen Verstärkern freie Anschluß des Kopplers 51 wird dazu verwendet, das in Aufwärtsrichtung übertragene optische Signal mit der Wellenlänge λ₂ aus dem Lichtwellenleiter auszukoppeln. Er ist über ein Lichtwellenleiterstück 53 mit dem Eingang eines Optisch-Elektrisch-Wandlers 54 verbunden, der das optische Signal in ein elektrisches umsetzt. Im einfachsten Fall wird nun das elektrische Ausgangssignal des Wandlers 54 direkt in den Lasertreiber der Pumplicht-Quelle eingespeist und moduliert dadurch die Intensität des von der Pumplicht-Quelle 52 erzeugten Lichts.

Die Frequenzen, die in dem modulierenden elektrischen Signal enthalten sind, liegen, wie oben erläutert, in einem Frequenzband zwischen 30 und 60 MHz. Somit ist es ausgeschlossen, daß die Modulation des Pumplichts die Verstärkung moduliert, die das vom Eingang des faseroptischen Verstärkers zu seinem Ausgang (in Abwärtsrichtung) zu übertragende optische Signal mit der Wellenlänge λ₁ beim Durchgang durch das verstärkende Faserstück 50 erfährt. Als Modulationsfrequenzen sind unter diesem Gesichtspunkt nämlich grundsätzlich alle Frequenzen geeignet, die sehr viel größer als der Kehrwert der Lebensdauer der durch das Pumplicht anregbaren Energiezustände des Er³⁺-Materials des Faserstücks 50, also Frequenzen von oberhalb 1 MHz, und das Frequenzband FB₃ liegt deutlich oberhalb davon.

Andernfalls müßte das Ausgangssignal des Wandlers 54 mit einer Hilfs-Modulationseinrichtung, die in Fig. 4 gestrichelt angedeutet und mit dem Bezugszeichen 55 bezeichnet ist, auf eine Hilfs-Trägerfrequenz aufmoduliert werden, damit ein für die Pumplicht-Quelle geeignetes Modulationssignal entsteht.

Im Normalbetrieb ist die Intensität des Pumplichts so hoch, daß aus dem vom Koppler 51 entfernten Ende des Faserstücks 50 ein beträchtlicher Anteil, der im Faserstück 50 nicht absorbiert wird, in den in Richtung zur Zentrale weiterführenden Lichtwellenleiter gelangt und von dort in Richtung zur Zentrale weiterübertragen wird. Das in Aufwärtsrichtung zu übertragende optische Signal wird also von der Verstärkerstelle A nicht wie bei Fig. 1 mit der Wellenlänge λ₂ zur Zentrale übertragen, sondern mit der Wellenlänge λₚ.

Selbstverständlich ist es auch möglich, daß die Pumplicht-Quelle zunächst unmoduliertes Licht erzeugt und das Ausgangssignal des Wandlers 54 dazu verwendet wird, das Pumplicht in einem der Pumplicht-Quelle nachgeschalteten Modulator zu modulieren. Auch in diesem Falle wird das von der Pumplicht-Quelle erzeugte Pumplicht moduliert.

Die vorstehend beschriebene Ausführung der Verstärkerstelle A ist eine Anwendung einer Erfindung, die für sich genommen bereits Gegenstand einer älteren deutschen Patentanmeldung P 40 36 327 ist, wobei das dort erwähnte, durch Modulation der Pumplicht-Quelle zu übertragende Zusatzsignal durch Entnahme am freien Ende des Kopplers 51 und Optisch-Elektrisch-Wandlung bereitgestellt wird. Die erforderliche Verstärkung erfährt das in Aufwärtsrichtung zu übertragende Signal im vorliegenden Fall dadurch, daß das elektrische Ausgangssignal des Wandlers 54 auf einen zur Modulation der Pumplicht-Quelle ausreichend hohen Pegel gebracht wird und daß das Pumplicht intensiv genug ist, um die Weiterübertragung bis zur Zentrale zu gewährleisten.

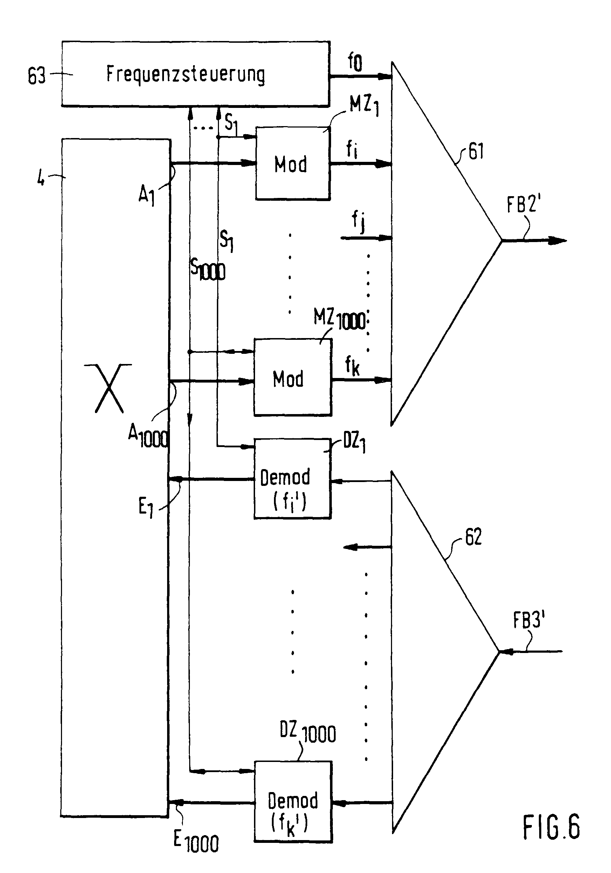

Eine dritte Ausgestaltung der Verstärkerstelle A aus Fig. 1 wird nun anhand von Fig. 5 erläutert. Sie enthält denselben faseroptischen Verstärker 10 wie die nach Fig. 4. Ebenfalls wie bei Fig. 4 ist der bei den an sich bekannten faseroptischen Verstärkern freie Anschluß des Kopplers 51 über ein Lichtwellenleiterstück 53 mit dem Eingang eines Optisch-Elektrisch-Wandlers 54 verbunden, der das optische Signal mit der Wellenlänge λ₂ = 1300 nm in ein elektrisches umsetzt. Das elektrische Ausgangssignal des Wandlers 54 wird dem elektrischen Eingang eines Elektrisch-Optisch-Wandlers 56 zugeführt, der es in ein optisches Signal mit der Wellenlänge λ₂ = 1300 nm umsetzt. Vom optischen Ausgang des Wandlers 56 gelangt das optische Signal über ein Lichtwellenleiterstück 58 zu einem wellenlängenselektiven Koppler 59, der es zur weiteren Übertragung in Aufwärtsrichtung in den von der Verstärkerstelle A in Richtung zur Zentrale (in der Zeichnung nach links) führenden Lichtwellenleiter einkoppelt. Dieses optische Signal ist im Vergleich zu dem optischen Eingangssignal des Wandlers 54 verstärkt, da der Wandler 54 typischerweise auch Verstärkungsfunktionen erfüllt.

Es sei noch erwähnt, daß eine optische Verstärkerstelle A, gleich welcher Ausführung, die nicht nur das in Abwärtsrichtung, sondern auch das in Aufwärtsrichtung übertragene Signal verstärkt, nicht nur auf den im Ausführungsbeispiel nach Fig. 1 gezeigten Streckenabschnitten eingefügt sein kann, sondern auf jeglichen Streckenabschnitten des gesamten Systems, auf denen eine solche "bidirektionale" Verstärkung erforderlich ist. Im Ausführungsbeispiel nach Fig. 1 ist der Vorteil gegeben, daß nur vier Verstärkerstellen des etwas aufwendigeren Typs A erforderlich sind, um mehr als 1000 Teilnehmer sowohl mit Verteildiensten als auch mit Dialogdiensten zu versorgen.

In der Zentrale ist für diese große Anzahl von Teilnehmern nur ein einziger teuerer optischer Sender erforderlich, der wegen der großen Bandbreite seines elektrischen Eingangssignals (80 bis 450 MHz) einen hochlinearen und damit teuren Laser enthalten muß.

Auch dieses Erfordernis kann gemindert werden, wenn die an den beiden Wandlern 3 und 6 eingangsseitig anliegenden Frequenzbänder durch Aufteilung und Zusammenfassung etwa gleich groß gemacht werden, so daß beispielsweise der eine Wandler ein Frequenzband von 30 bis 240 MHz und der andere ein Frequenzband von 240 bis 450 MHz zu verarbeiten hat.

Selbstverständlich kann das System durch Hinzunahme weiterer Verzweigungspunkte erweitert werden, wobei jeweils zu beachten ist, ob das Verhältnis zwischen den Kosten und dem erzielbaren Nutzen angemessen ist.

Weiter sei erwähnt, daß die Anzahl der von den Kopplern 26 und 28 in Abwärtsrichtung weiterführenden Lichtwellenleitern statt 16 wie beim Ausführungsbeispiel auch gleich einer anderen Zahl n bzw. m sein kann, die in der Größenordnung von 16 liegt, z.B. n = 18, m = 20. Außerdem muß die Anzahl der Lichtwellenleiter LA₁ bis LA₄, auf die nahe bei oder in der Zentrale eine Verzweigung erfolgt, nicht gleich vier sein, wie es im Ausführungsbeispiel gezeigt ist. Die Anzahl könnte auch eine andere Zahl, z.B. fünf, in der Größenordnung von vier sein.

Im folgenden wird eine Modifikation des neuen Systems erläutert, die sich auf die Wahl der Frequenzen bezieht, mit denen die teilnehmerindividuellen Nachrichtensignale zwischen der Zentrale und den Teilnehmern und umgekehrt übertragen werden.

Die Modifikation liegt darin, daß die den Teilnehmern individuell zugeteilten Frequenzen nicht fest zugeteilt sind, wie dies anhand des Ausführungsbeispiels nach Fig. 1 und Fig. 2 beschrieben ist, sondern daß Mittel vorhanden sind, um einem Teilnehmer eine von n Frequenzen aus dem einen Band und eine von n Frequenzen aus dem anderen Frequenzband zuzuteilen, wobei n deutlich kleiner als die Anzahl der Teilnehmer ist. Diese Zuteilung geschieht bedarfsweise, d.h. einem Teilnehmer wird nur dann eine von den n Freuquenzen zugeteilt, wenn tatsächlich eine Verbindung zwischen dem Teilnehmer und der Zentrale zum Zwecke einer bidirektionalen Nachrichtenübertragung erforderlich ist. Solange ein Teilnehmer mit keinem anderen Teilnehmer kommunizieren will und auch nicht von einem an die Zentrale angeschlossenen Teilnehmer angerufen wird, ist ihm keine der n Frequenzen zugeteilt, sondern steht den anderen Teilnehmern zur Verfügung.

Bei einer angenommenen maximalen Verkehrsdichte von 0,1 Erl reichen für eine Gruppe von etwa 1000 Teilnehmern ungefähr 100 Kanäle aus, um den Fernsprech- und Datenverkehr zwischen der Zentrale und den 1000 Teilnehmern abzuwickeln.

Man kann die Zuordnung der Frequenzen, d.h. Kanälen, zu den Teilnehmern als dynamische Zuordnung bezeichnen, im Gegensatz zu der anhand von Fig. 1 und Fig. 2 beschriebenen Zuordnung, die eine feste oder statische Zuordnung ist. Teilnehmerindividuell ist die Zuordnung in jedem Falle, da zu einem bestimmten Zeitpunkt eine Frequenz, d.h. Kanal nur einem einzigen Teilnehmer zugeordnet ist.

Anhand der Figuren 6 bis 8 wird nun als ein Beispiel beschrieben, worin die Modifikation gegenüber den obigen Ausführungsbeispielen liegt.

Wie bei dem Ausführungsbeispiel nach Fig. 1 gibt es in der Zentrale eine Ortsvermittlungsstelle 4, an die die betrachteten Teilnehmer über das Lichtwellenleiternetz angeschlossen sind. Ebenso wie bei den obigen Ausführungsbeispielen hat die Vermittlungstelle 4 Ausgangs- und Eingangsanschlüsse, die mit Modulatoren bzw. Demodulatoren verbunden sind. Für jeden Teilnehmer ist ein eigener Modulator in der Zentrale vorhanden, und in Fig. 6 sind stellvertretend für die Modulatoren der etwa 1000 an eine Vermittlungsstelle 4 angeschlossenen Teilnehmer zwei Modulatoren MZ₁ und MZ₁₀₀₀ gezeigt. Dasselbe gilt für die Demodulatoren, von den stellvertretend für alle nur zwei gezeigt und mit DZ₁ und DZ₁₀₀₀ bezeichnet sind.

Ist von der Vermittlungsstelle 4 beispielsweise zum Teilnehmer Nr. 1 ein Signal zu übertragen, so erscheint dieses an einem Teilnehmerausgang A₁ der Vermittlungsstelle und gelangt von dort auf den Modulator MZ₁ dieses Teilnehmers, der die Aufgabe hat, es einem Träger aufzumodulieren und dadurch in ein bestimmtes Frequenzband umzusetzen. Die modulierten Signale von den Ausgängen der Modulatoren werden in einem Leistungsaddierer 61 zu einem Frequenzmultiplex-Signal zusammengefaßt, das ein bestimmtes Frequenzband belegt. Jeder der Demodulatoren empfängt ein ein anderes Frequenzband belegendes Frequenzmultiplex-Signal von der Gesamtheit der Teilnehmer, wie es in Fig. 1 gezeigt ist, und hat die Aufgabe, ein eventuell darin enthaltenes zu einem speziellen Teilnehmer gehörendes Signal aus der dem Teilnehmer zugeordneten Frequenzlage in die Basisbandlage umzusetzen, in der es in den zugehörigen Teilnehmereingang der Vermittlungsstelle 4 eingegeben wird. Von der Gesamtheit aller Teilnehmereingänge der Vermittlungsstelle 4 sind nur zwei gezeigt und mit E₁ und E₁₀₀₀ bezeichnet. Zum Verteilen des Frequenzmultiplex-Signals auf die Demodulatoren dient ein Leistungsteiler 62. Soweit bisher erläutert, besteht kein Unterschied zu den Demodulatoren, wie sie anhand von Fig. 1 erläutert sind.

Der wesentliche Unterschied ist, daß jeder Modulator und jeder Demodulator auf eine von n Frequenzen einstellbar ist, wobei n beispielsweise gleich 100 ist, wenn die Anzahl der Teilnehmer gleich 1000 ist. In anderen Worten: Die Frequenz des Trägers, auf die ein Modulator sein Eingangssignal aufmoduliert, und die Frequenz eines mit einem Signal modulierten Trägers, das ein Demodulator durch Demodulation wiedergewinnen kann, ist nicht fest, sondern einstellbar. Eine in der Zentrale vorhandene Frequenzsteuerung 63 sorgt dafür, daß einem Teilnehmer nur bei Bedarf eine Frequenz zugeteilt wird und daß die gewählte Zuteilung teilnehmerindividuell ist, d.h. daß niemals mehreren Teilnehmern dieselbe Frequenz gleichzeitig zugeteilt wird.

Die Zuteilung der Frequenzen zu den Modulatoren und den Demodulatoren mit Hilfe der Frequenzsteuerung 63 geschieht wie folgt: Die Frequenzsteuerung 63 ist mit jedem für einen Teilnehmer in der Zentrale vorhandenen Modulator-Demodulator-Paar über eine Daten- und Steuer-Leitung verbunden. Im Falle des Modulator-Demodulator-Paars des Teilnehmers Nr. 1 ist diese Leitung mit S₁ und im Falle des Modulator-Demodulator-Paars des Teilnehmers Nr. 1000 mit S₁₀₀₀ bezeichnet. Diese Leitungen, die praktisch Busleitungen sind, sind in Fig. 6 deutlich dünner gezeichnet als die Leitungen zur Übertragung der Teilnehmer-Nutzsignale.

Eine bidirektionale Nachrichtenübertragung zwischen einem Teilnehmer und der Zentrale kann, wie es für den Fernsprechverkehr typisch ist, entweder von der Zentrale, d.h. von der Vermittlungsstelle 4, initiiert werden oder vom Teilnehmer. In anderen Worten: Entweder ruft die Vermittlungsstelle einen Teilnehmer, oder der Teilnehmer sendet ein Rufsignal an die Vermittlungsstelle. In beiden Fällen ist dafür zu sorgen, daß für die einzurichtende Nachrichtenverbindung die Frequenzen zugeteilt werden.

Im ersten Fall, wenn die Vermittlungsstelle beispielsweise einen Ruf zum Teilnehmer Nr. 1 senden will, erkennt der Modulator MZ₁, daß am Teilnehmerausgang A₁ der Zustand besteht, der für einen von der Vermittlungsstelle zu einem Teilnehmer gehenden Ruf typisch ist. Wenn der Ausgang A₁ zusammen mit dem Eingang E₁ einen Teilnehmeranschluß einer Analog-Vermittlungsstelle bildet, also einen klassischen Anschluß für eine Teilnehmeranschlußleitung mit einer a, b-Ader, so ist dies ein bestimmter Strom-Spannungs-Zustand der a, b-Ader. Wenn es sich dabei um eine S₀-Schnittstelle einer ISDN-Vermittlungsstelle handelt, so ist dies der an einer solchen Schnittstelle typischerweise bei einem von der Vermittlung zu einem Teilnehmer abgehenden Rufsignal vorhandene Rufsignal-Zustand. In jedem Falle stellt der Modulator MZ₁ fest, daß von der Vermittlungsstelle ein Ruf an den Teilnehmer Nr. 1 gesendet werden soll und signalisiert über die Leitung S₁ diesen Zustand an die Frequenzsteuerung. Diese sucht daraufhin einen freien Kanal für den Modulator MZ₁. Dies tut sie, indem sie kontinuierlich den Status aller Modulatoren über die jeweiligen Steuer- und Datenleitungen abfragt, ob und mit welcher Frequenz sie gerade ein Nachrichtensignal senden. Aufgrund einer solchen kontinuierlichen Abfrage ist in der Frequenzsteuerung gespeichert, welche von n insgesamt belegbaren Frequenzen gerade unbelegt sind. Findet sie eine unbelegte Frequenz, so gibt sie einen dieser Frequenz entsprechenden Steuerbefehl über die Steuerleitung S₁ zum Modulator MZ₁, das diesen veranlaßt, sich auf die gefundene Frequenz einzustellen. Diese Frequenz ist im Ausführungsbeispiel nach Fig. 6 mit fᵢ bezeichnet. Sie ist eine der n Frequenzen aus einem Frequenzband FB2', das an späterer Stelle noch erläutert wird.

Gemäß einem vorteilhaften Merkmal des Ausführungsbeispiels nach Fig. 6 werden einem Teilnehmer für die beiden Übertragungsrichtungen jeweils zwei Frequenzen zugeteilt, die sich um einen vorgegebenen Betrag voneinander unterscheiden. Wenn also die Frequenzsteuerung zum Beispiel für die Übertragung zum Teilnehmer Nr. 1 eine Frequenz fᵢ von 960 MHz auswählt, so wählt sie damit gleichzeitig auch eine Frequenz fᵢ' für den Demodulator DZ₁ desselben Teilnehmers aus, die z.B. um 60 MHz niedriger ist, im betrachteten Beispiel also 900 MHz beträgt.

Falls es ein Teilnehmer ist, der eine bidirektionale Nachrichtenübertragung zwischen ihm und der Zentrale initiiert, also praktisch einen Ruf an die Zentrale sendet, so geschieht die Frequenzzuteilung zu dem Teilnehmer wie folgt:

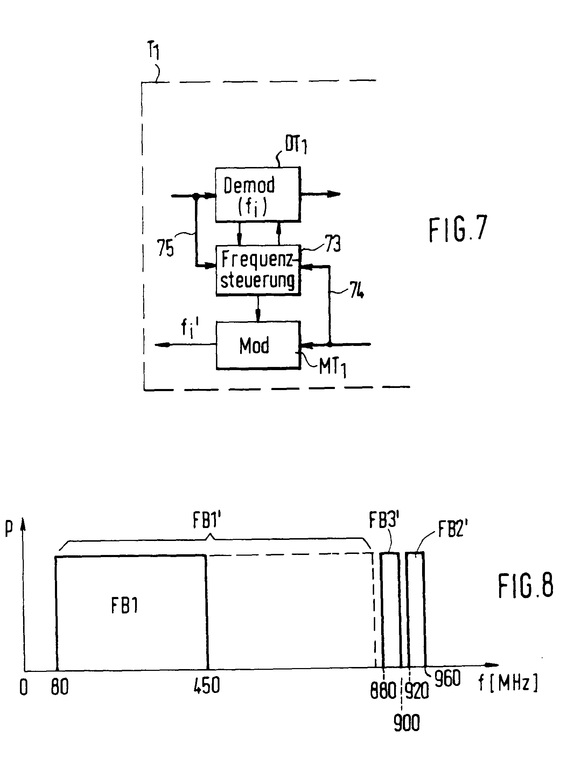

In Fig. 7 ist der für die Frequenzzuteilung zu dem Teilnehmer erforderliche Teil einer Teilnehmereinrichtung T₁ des erfindungsgemäßen Systems gezeigt. Zum Zwecke der Erläuterung der Frequenzzuteilung zu einem speziellen Teilnehmer wird diese Teilnehmereinrichtung als die des Teilnehmers Nr. 1 aus einer Anzahl von 1000 an die Zentrale angeschlossenen Teilnehmern betrachtet. Wie die Teilnehmereinrichtung aus Fig. 2 hat sie einen Modulator und einen Demodulator, die hier allerdings in der Frequenz einstellbar sind. Sie sind mit MT₁ bzw. DT₁ bezeichnet. Zur Einstellung ihrer Frequenzen dient eine Frequenzsteuerung 73.

Gelangt vom Teilnehmerendgerät her ein Rufsignal, das die Teilnehmereinrichtung zur Zentrale senden will, zum Eingang des Modulators MT₁, so gelangt es außerdem direkt oder über den Modulator zu einem Eingang der Frequenzsteuerung 73, im gezeigten Beispiel über eine Leitung 74. Andererseits empfängt die Frequenzsteuerung 73 laufend aus einem Frequenzsteuerungs-Kanal auf einer Eingangsleitung 75 Informationen über die aktuelle Belegung der Frequenzen, die von der Frequenzsteuerung 63 der Zentrale kontinuierlich zur Gesamtheit der Teilnehmer gesendet werden, indem ein weiterer Träger, der eine Frequenz f₀ hat, mit den Informationen moduliert wird. Aus dem Empfang solcher Informationen hat die Frequenzsteuerung Kenntnis über freie Frequenzen, die für eine Übertragung von einem Teilnehmer zur Zentrale in Frage kommen, also nicht bereits einem Modulator eines anderen Teilnehmers zugeteilt sind. Ist eine der in Frage kommenden Frequenzen unbelegt, so veranlaßt die Frequenzsteuerung 73 den Modulator MT₁, sich auf diese Frequenz einzustellen, und veranlaßt gleichzeitig auch den Demodulator DT₁, sich auf eine um den oben erwähnten fest vorgegebenen Betrag abweichende Frequenz aus dem anderen Frequenzband einzustellen. In der Zeichnung ist angedeutet, daß der Modulator MT₁ den Ruf zur Zentrale auf einen Träger mit einer Frequenz fᵢ' aufmoduliert, zur Zentrale sendet, und der Demodulator DT₁ auf den Empfang eines Signals mit der Trägerfrequenz fᵢ eingestellt ist.

Die Demodulatoren in der Zentrale, z.B. DZ₁, und die Demodulatoren bei den Teilnehmern, z.B. DT₁, tasten, gesteuert durch die jeweils vorhandene Frequenzsteuerung 63 bzw. 73, das für sie vorgesehene Frequenzband daraufhin ab, ob eine der n Frequenzen mit einem Rufsignal von dem Teilnehmer, zu dem sie gehören, oder ein Rufsignal zu dem Teilnehmer, zu dem sie gehören, moduliert ist. Solange sie in diesem Abtast-Zustand arbeiten, sperren sie ihren zur Vermittlungsstelle bzw. zum Teilnehmer-Endgerät führenden Nachrichtensignalausgang. Stellt ein Demodulator eines Teilnehmers, auf Seite der Zentrale oder auf Seite des Teilnehmers, fest, daß eine der abgetasteten Frequenzen mit einem Rufsignal moduliert ist, das diesem Teilnehmer speziell zugeordnet ist, so stellt die bei ihm vorhandene Frequenzsteuerung ihn auf diese Frequenz ein und stellt auch den Modulator desselben Modulator-Demodulator-Paars auf eine von der gefundenen Frequenz um den fest vorgegebenen Betrag abweichende Frequenz aus dem jeweils anderen Frequenzband ein.

Nachdem beispielsweise der Modulator MZ₁ zum Zwecke eines von der Vermittlung 4 zum Teilnehmer T₁ auszusendenden Rufsignals durch die Frequenzsteuerung 63 auf eine Frequenz fᵢ (z.B. 960 MHz) eingestellt worden ist, stellt der Demodulator DT₁ beim Teilnehmer T₁ durch Abtasten der Frequenzen den an ihn gerichteten Ruf auf der Frequenz fᵢ fest, und die Frequenzsteuerung 73 stellt ihn daraufhin auf diese Frequenz fᵢ ein und stellt gleichzeitig den Modulator MT₁ auf die Frequenz fᵢ' ein (z.B. 900 MHz). Auf diese Frequenz hat die Frequenzsteuerung 63 bereits den Demodulator DZ₁ in der Zentrale gleichzeitig mit der Frequenzeinstellung des Modulators MZ₁ eingestellt.

War es im anderen Fall der Modulator MT₁, der zum Aussenden eines Rufs an die Zentrale von der Frequenzsteuerung 73 auf eine freie Frequenz fᵢ' eingestellt wurde (z.B. 900 MHz), so stellt der Demodulator DZ₁ in der Zentrale durch Abtasten sämtlicher Emfangsfrequenzen fest, daß diese Frequenz mit einem Rufsignal vom Teilnehmer T₁ moduliert ist. Daraufnin sorgt die mit ihm verbundene Frequenzsteuerung 63 für die Einstellung des Modulators MZ₁ auf eine um den fest vorgegebenen Betrag höhere Frequenz fᵢ (z.B. 960 MHz).

Stellt ein Modulator, entweder der in der Zentrale oder der beim Teilnehmer, am Zustand seiner Eingangsleitung fest, daß der Teilnehmer in den Gesprächsende- oder Datenübertragungsende-Zustand übergegangen ist, so hört er auf, mit der eingestellten Trägerfrequenz zu senden, gibt also diese frei. Gleichzeitig sorgt die Frequenzsteuerung dafür, daß der zugehörige Demodulator in den Zustand der Abtastung der als Empfangsfrequenzen in Frage kommenden Frequenzen übergeht.

Oben wurde erläutert, daß die Frequenzsteuerung der Zentrale den Zustand der Modulatoren abfragt, um eine freie Frequenz für einen Modulator zu finden. Da die Sende- und Empfangsfrequenz eines Modulator-Demodulator-Paars eines Teilnehmers wie erläutert einander fest zugeordnet sind, ist es auch möglich, daß die Frequenzsteuerung in der Zentrale die Kenntnis über freie Frequenzen aus dem Ergebnis der kontinuierlichen Abtastung des für die Demodulatoren vorgesehenen Frequenzbandes durch die Demodulatoren gewinnt, statt den Status der Modulatoren kontinuierlich abzufragen. In entsprechender Weise ist es bei den Teilnehmern möglich, daß die Frequenzsteuerung die Kenntnis über freie Frequenzen für Demodulatoren aus der kontinuierlichen Abtastung des für die Demodulatoren vorgesehenen Frequenzbandes gewinnt, anstatt die auf dem Frequenzsteuerungs-Kanal empfangenen Informationen über den Belegungsstatus von Frequenzen durch die Zentrale auszuwerten. In diesem Falle kann auf die Einrichtung des Frequenzsteuerungs-Kanals generell verzichtet werden.

Es sei noch erwähnt, daß die Demodulatoren ihren Nachrichtensignal-Ausgang nach Erkennen eines teilnehmerspezifischen Rufsignals freigeben. Weiterhin sei erwähnt, daß statt einer zentralen Frequenzsteuerung 63, wie sie in Fig. 6 gezeigt ist, in der Zentrale auch teilnehmerindividuelle Frequenzsteuerungen vorgesehen sein können, wie sie anhand der Fig. 7 für einen Teilnehmer erläutert sind, allerdings dann solche, die die Abtastung durch den teilnehmerindividuellen Demodulator auswerten statt zentral ermittelte und gespeicherte Informationen.

Eine weitere Variante wäre, daß auf der Seite der Zentrale nicht so viele Modulator-Demodulator-Paare wie Teilnehmer, sondern nur so viele wie Frequenzkanäle zur Verfügung stehen, im Beispiel also nicht 1000 sondern nur 100, daß die Modulatoren und Demodulatoren auf feste Frequenzen eingestellt sind und eine vermittlungstechnische Einrichtung zwischen der normalen Vermittlung 4 und den Modulatoren vorhanden ist, die die Ausgänge der normalen Vermittlung mit den Eingängen von gerade freien Modulatoren und die Ausgänge der Demodulatoren mit Eingängen der gerade gerufenen Teilnehmeranschlüsse der Vermittlung verbinden. Auch bei einer solchen Ausführung der in der Zentrale vorhandenen Einrichtungen wäre dafür gesorgt, daß einem Teilnehmer bedarfsweise und teilnehmerindividuell ein Paar von Frequenzen für die beiden Übertragungsrichtungen zuteilbar ist.

Bei dem Ausführungsbeispiel nach Fig. 6 ist durch die gewählten Frequenzbezeichnungen gezeigt, daß unterschiedlichen Teilnehmern unterschiedliche Frequenzen zugeteilt werden und daß die einem Modulator und einem demselben Teilnehmer zugeordneten Demodulator zugeteilten Frequenzen in einer bestimmten Beziehung zueinander stehen.

Fig. 8 zeigt die Lage der Frequenzbänder, in denen die vorstehend erläuterten Frequenzen liegen. Für die Übertragung von der Zentrale zu den Teilnehmern ist ein Frequenzband FB2' vorgesehen, und für die Übertragung in der umgekehrten Richtung ein Frequenzband FB3', wobei das erstere oberhalb des letzteren liegt. Beide liegen im Gegensatz zu dem Frequenzplan nach Fig. 3 oberhalb des für die zu den Teilnehmern zu verteilenden Signale wie Fernsehsignale vorgesehenen Frequenzbandes FB1. FB3' reicht von 860 bis 900 MHz, und FB2' reicht von 920 bis 960 MHz. Bei dieser Lage kann das Frequenzband FB1 gegenüber den in Fig. 3 gezeigten deutlich vergrößert werden, wie es mit FB1' angedeutet ist.

Durch die beschriebene variable Frequenzzuteilung ist es möglich, die Frequenzzuteilung flexibel entsprechend der Bandbreite, die für den Teilnehmeranschluß gegeben ist, vorzunehmen. Ist ein Teilnehmeranschluß ein Anschluß für normales Fernsprechen, so kann bei der Kanalzuteilung ein geringerer Abstand zu einem solchen Schmalband-Kanal vorgesehen werden, wogegen ein größerer Kanalabstand eingestellt werden kann, wenn es sich um einen Kanal mit größerer Bandbreite, z.B. einen ISDN-Kanal oder sogar einen Kanal mit noch größerer Bandbreite von z.B. 2 Mbit/s handelt. Ein weiterer Vorteil ist, daß wegen der insgesamt geringeren Anzahl der erforderlichen Kanäle an Bandbreite für das zu bildende Frequenzmulitplex-Signal gespart wird, was die optische Übertragung des Frequenzmultiplex-Signals erleichtert.

## Patentansprüche

1. Optisches Nachrichtenübertragungssystem mit einer Zentrale (1) und einer Vielzahl von Teilnehmern (Tᵢ), bei dem die Teilnehmer über ein Stern-Stern-förmiges Lichtwellenleiternetz (LAᵢ, LBᵢ, LCᵢ) mit der Zentrale (1) verbunden sind, bei dem zwischen aufeinanderfolgenden Verzweigungspunkten des Lichtwellenleiternetzes faseroptische Verstärker (10, 11) vorhanden sind, bei dem die von der Zentrale (1) an die Teilnehmer (Tᵢ) zu verteilenden Nachrichtensignale, insbesondere Fernsehsignale, umgesetzt in ein erstes Frequenzband (FB1), als optisches Signal mit einer ersten Wellenlänge (λ₁) über das Lichtwellenleiternetz zu den Teilnehmern (Tᵢ) übertragen werden, wobei das optische Signal durch die faseroptischen Verstärker (10, 11) verstärkt wird,
**dadurch gekennzeichnet,**
daß Mittel vorhanden sind, um von der Zentrale zu den Teilnehmern (Tᵢ) zu übertragende teilnehmerindividuelle Nachrichtensignale, insbesondere Fernsprechsignale, umgesetzt in ein zweites Frequenzband (FB2) mit teilnehmerindividuellen Frequenzen, als optisches Signal mit der ersten Wellenlänge (λ₁) zu den Teilnehmern zu übertragen, wobei das optische Signal in den faseroptischen Verstärkern (10, 11) verstärkt wird,
daß Mittel vorhanden sind, um von den Teilnehmern zu der Zentrale zu übertragende teilnehmerindividuelle Nachrichtensignale, insbesondere Fernsprechsignale, umgesetzt in ein drittes Frequenzband (FB3) mit teilnehmerindividuellen Frequenzen, als optisches Signal mit einer zweiten Wellenlänge (λ₂) über dasselbe Lichtwellenleiternetz zur Zentrale zu übertragen, ohne daß das optische Signal mit der zweiten Wellenlänge in den faseroptischen Verstärkern verstärkt wird, und daß an Stellen (A) des Lichtwellenleiternetzes, an denen eine Verstärkung des zur Zentrale zu übertragenden optischen Signals mit der zweiten Wellenlänge (λ₂) erforderlich ist, Mittel (40-42; 51-54) vorhanden sind, um das zur Zentrale zu übertragende optische Signal aus dem Lichtwellenleiter (LA₄) auszukoppeln, zu verstärken und wieder in den Lichtwellenleiter (LA₄) einzukoppeln.

2. System nach Anspruch 1, dadurch gekennzeichnet, daß das Stern-Stern-förmige Lichtwellenleiternetz in oder nahe bei der Zentrale (1) auf mehrere Lichtwellenleiter (LA₁ bis LA₄) verzweigt ist, daß jeder der mehreren Lichtwellenleiter zu einem Leistungsteiler (26) führt, von dem n Lichtwellenleiter (LB₁ bis LB₁₆) weiterführen, und daß jeder dieser n Lichtwellenleiter (LB₁ bis LB₁₆) zu einem Leistungsteiler (28) führt, von dem m Lichtwellenleiter (LC₁ bis LC₁₆) jeweils zu einem Teilnehmer (Tᵢ) führen.

3. System nach Anspruch 1 oder 2, dadurch gekennzeichnet, daß die erste Wellenlänge (λ₁) etwa 1550 nm und die zweite Wellenlänge (λ₂) etwa 1300 nm beträgt.

4. System nach einem der Ansprüche 1 bis 3, dadurch gekennzeichnet, daß das zweite Frequenzband (FB₂) und das dritte Frequenzband (FB₃) oberhalb bzw. unterhalb des ersten Frequenzbandes (FB₁) liegen.

5. System nach Anspruch 4, dadurch gekennzeichnet, daß das zweite Frequenzband (FB₂) etwa ein Band von 470 bis 500 MHz und das dritte Frequenzband (FB₃) etwa ein Band von 30 bis 60 MHz ist und daß die in diesen Bändern liegenden teilnehmerindividuellen Frequenzen in einem Abstand von etwa 30 kHz auseinanderliegen und daß die Umsetzung der zu übertragenden teilnehmerindividuellen Nachrichtensignale in die Frequenzbänder durch Frequenzmodulation der teilnehmerindividuellen Frequenzen geschieht.

6. System nach einem der vorstehenden Ansprüche, dadurch gekennzeichnet, daß die Mittel (40, 41, 42), um das zur Zentrale (1) zu übertragende optische Signal aus dem Lichtwellenleiter (LA₄) auszukoppeln, zu verstärken und wieder in den Lichtwellenleiter (LA₄) einzukoppeln, wellenlängenselektive Lichtwellenleiter-Koppler (40, 42) und ein für die Wellenlänge (λ₂) des zu verstärkenden optischen Signals optimierter faseroptischer Verstärker (41) sind.

7. System nach einem der Ansprüche 1 bis 5, dadurch gekennzeichnet, daß die Mittel (51, 53, 54, 52), um das zur Zentrale zu übertragende optische Signal aus dem Lichtwellenleiter (LA₄) auszukoppeln, zu verstärken und wieder in den Lichtwellenleiter (LA₄) einzukoppeln, ein zum faseroptischen Verstärker (10) für die Gegenrichtung gehörender wellenlängenselektiver Pumplicht-Koppler (51), ein Optisch-Elektrisch-Wandler (54) und die zum faseroptischen Verstärker (10) für die Gegenrichtung gehörende Pumplicht-Quelle (52) sind, und
daß diese Mittel derart miteinander verbunden sind, daß das zu verstärkende zur Zentrale zu übertragende optische Signal von einem Anschluß des Pumplicht-Kopplers (51) zum Eingang des Optisch-Elektrisch-Wandlers (54) gelangt und dessen elektrisches Ausgangssignal das von der Pumplicht-Quelle (52) erzeugte Pumplicht moduliert.

8. System nach einem der Ansprüche 1 bis 5, dadurch gekennzeichnet, daß die Mittel (51, 53, 54, 56, 58, 59), um das zur Zentrale zu übertragende optische Signal aus dem Lichtwellenleiter (LA₄) auszukoppeln, zu verstärken und wieder in den Lichtwellenleiter einzukoppeln, ein zum faseroptischen Verstärker (10) für die Gegenrichtung gehörender wellenlängenselektiver Pumplicht-Koppler (51), ein Optisch-Elektrisch-Wandler (54), ein Elektrisch-Optisch-Wandler (56) und ein dessen optisches Ausgangssignal in den Lichtwellenleiter (LA₄) einkoppelnder wellenlängenselektiver Lichtwellenleiter-Koppler (59) sind.

9. System nach einem der Ansprüche 1, 2, 3, 6, 7 und 8, dadurch gekennzeichnet, daß die Mittel zum Übertragen von teilnehmerindividuellen Nachrichtensignalen zwischen der Zentrale und den Teilnehmern und umgekehrt Mittel (63,73) enthalten, um einem Teilnehmer (T₁) bedarfsweise und teilnehmerindividuell eine (fᵢ) von n Frequenzen aus dem zweiten (FB2') und eine (fᵢ') von n Frequenzen aus dem dritten Frequenzband (FB3') zuzuteilen, wobei n deutlich kleiner als die Anzahl der Teilnehmer ist.

10. System nach Anspruch 9, dadurch gekennzeichnet,
- daß die Mittel zum Übertragen von teilnehmerindividuellen Nachrichtensignalen pro Teilnehmer ein Modulator-Demodulator-Paar (MZ₁, DZ₁) in der Zentrale und ein Modulator-Demodulator-Paar (MT₁, DT₁) beim Teilnehmer (T₁) enthalten,
- daß die einem Teilnehmer (T₁) aus dem zweiten Frequenzband (FB2') zugeteilte Frequenz (fᵢ) die Frequenz eines Trägers ist, den der Modulator (MZ₁) in der Zentrale mit dem zum Teilnehmer zu übertragenden Nachrichtensignal moduliert und den der Demodulator (DT₁) beim Teilnehmer (T₁) mit dieser Modulation empfängt und demoduliert, und
- daß die dem Teilnehmer (T₁) aus dem dritten Frequenzband (FB3') zugeteilte Frequenz die Frequenz eines Trägers ist, den der Modulator (MT₁) beim Teilnehmer mit dem zur Zentrale zu übertragenden Nachrichtensignal moduliert und den der Demodulator (DZ₁) in der Zentrale mit dieser Modulation empfängt und demoduliert.

11. System nach Anspruch 10, dadurch gekennzeichnet, daß die die genannten Frequenzen (fᵢ, fᵢ') einem Teilnehmer zuteilenden Mittel (63, 73) eine Frequenz aus dem zweiten Frequenzband (FB2') und eine Frequenz aus dem dritten Frequenzband (FB3') auswählen, die sich um einen fest vorgegebenen Betrag voneinander unterscheiden.

12. System nach Anspruch 11, dadurch gekennzeichnet, daß,
- falls es die Zentrale ist, von der aus eine bidirektionale Nachrichtübertragung zwischen ihr und einem Teilnehmer (T₁) initiiert wird,
- eine in der Zentrale vorhandene Frequenzsteuerung (63) unter den genannten n Frequenzen des zweiten Frequenzbandes (FB2') eine von anderen Teilnehmern nicht belegte Frequenz (fᵢ) sucht und den zu dem Teilnehmer in der Zentrale gehörenden Modulator (MZ₁) auf diese Frequenz (fᵢ) einstellt und den zu demselben Teilnehmer in der Zentrale gehörenden Demodulator (DZ₁) auf eine von der für den Modulator gefundenen Frequenz (Fᵢ) um den fest vorgegebenen Betrag abweichende Frequenz (fᵢ') aus dem dritten Frequenzband (FB3') einstellt und
- falls es ein Teilnehmer ist, der eine bidirektionale Nachrichtenübertragung zwischen ihm und der Zentrale initiiert,
- eine beim Teilnehmer vorhandene Frequenzsteuerung (73) unter den genannten n Frequenzen des dritten Frequenzbandes (FB3') eine von anderen Teilnehmern nicht belegte Frequenz (fᵢ') sucht und den Modulator (MT₁) beim Teilnehmer (T₁) auf diese Frequenz einstellt und den bei demselben Teilnehmer (T₁) vorhandenen Demodulator (DT₁) auf eine von der für den Modulator gefundenen Frequenz (fᵢ') um den fest vorgegebenen Betrag abweichende Frequenz (Fᵢ) aus dem zweiten Frequenzband (FB2') einstellt, daß
- die pro Teilnehmer in der Zentrale vorhandenen Demodulatoren (DZ₁ bis DZ₁₀₀₀) und die bei den Teilnehmern vorhandenen Demodulatoren (DT₁), solange ihnen eine Frequenz nicht zugeteilt ist, das für sie vorgesehene Frequenzband, gesteuert durch die jeweilige Frequenzsteuerung daraufhin abtasten, ob eine der n Frequenzen mit einem Rufsignal zu dem Teilnehmer oder von dem Teilnehmer moduliert ist und daß die jeweilige Frequenzsteuerung, falls dies für eine der Frequenzen festgestellt wird, den Demodulator auf diese Frequenz und den Modulator desselben Modulator-Demodulator-Paars auf eine von der gefundenen Frequenz um den fest vorgegebenen Betrag abweichende Frequenz aus dem jeweils anderen Frequenzband einstellt.

13. System nach einem der Ansprüche 9 bis 12, dadurch gekennzeichnet, daß das zweite Frequenzband (FB2') oberhalb des dritten (FB3') und dieses oberhalb des ersten Frequenzbandes (FB1 oder FB1') liegt.

14. System nach Anspruch 13, dadurch gekennzeichnet, daß das zweite Frequenzband (FB2') etwa ein Band von 920 bis 960 MHz und das dritte Frequenzband (FB3') etwa ein Band von 880 bis 920 MHz ist.

15. System nach einem der Ansprüche 9 bis 12, dadurch gekennzeichnet, daß die in der Zentrale vorhandene Frequenzsteuerung (63) eine weitere Frequenz (f₀) mit Informationen über die aktuelle Belegung der n Frequenzen moduliert und daß das so gebildete Signal zu allen Teilnehmern übertragen wird und daß die bei den Teilnehmern vorhandene Frequenzsteuerung (73), solange ein Teilnehmer keine Frequenz belegt hat, dieses Signal empfängt und zum Suchen einer unbelegten Frequenz verwendet.

## Claims

1. Optical communication system with a center (1) and a plurality of subscribers (Tᵢ), in which the subscribers are connected to the center (1) via a star-star-shaped fiber-optic network (LAᵢ, LBᵢ, LCᵢ) with the center (1), wherein fiber-optic amplifiers (10, 11) are present between successive branch points of the fiber-optic network, in which the information signals, particularly television signals, to be distributed by the center (1) to the subscribers (Tᵢ), after being converted to a first frequency band (FB1), are transmitted as an optical signal having a first wavelength (λᵢ) over the fiber-optic network to the subscribers (Tᵢ), the optical signal being amplified by the fiber-optic amplifiers (10, 11), characterized in that
means are provided for transmitting subscriber-individual information signals, particularly telephone signals, converted to a second frequency band (FB2) with subscriber-individual frequencies, as an optical signal having the first wavelength (λᵢ) from the center to the subscribers, the optical signal being amplified in the fiber-optic amplifiers (10, 11), the optical signal being amplified in the fiber-optic amplifiers (10, 11);
that means are provided for transmitting subscriber-individual information signals, particularly telephone signals, converted to a second frequency band (FB2) with subscriber-individual frequencies, as an optical signal having the first wavelength (λ₁) from the center to the subscribers, the optical signal being amplified in the fiber-optic amplifiers (10, 11);
that means are provided for transmitting subscriber-individual information signals, particularly telephone signals, converted to a third frequency band (FB3) with subscriber-individual frequencies, as an optical signal having a second wavelength (λ₂) from the subscribers to the center over the same fiber-optic network without the optical signal having the second wavelength being amplified in the fiber-optic amplifiers; and
that at points (A) of the fiber-optic network where amplification of the optical signal to be transmitted to the center and having the second wavelength (λ₂) is necessary, means (40-42; 51-54) are provided for extracting said optical signal to be transmitted to the center from the optical waveguide (LA₄), amplifying it, and reinjecting it into the optical waveguide (LA₄).

2. A system as claimed in claim 1, characterized by the fact that, in or near the center (1), the star-star-shaped fiber-optic network branches into several optical waveguides (LA₁ to LA₄), that each of the several optical waveguides leads to a power divider (26), having n optical waveguides (LB₁ through LB₁₆), and that each of said n optical waveguides (LB₁ through LB₁₆) leads to a power divider (28) from which each of m optical waveguides (LC₁ to LC₁₆) leads to a subscriber (Tᵢ).

3. A system as claimed in claim 1 or 2, characterized in that the first wavelength (λ₁) is approximately 1550 nm and that the second wavelength (λ₂) is approximately 1300 nm.

4. A system as claimed in one of claims 1 through 3, characterized in that the second frequency band (FB₂) and the third frequency band (FB₃) lie above and below the first frequency band (FB₁), respectively.

5. A system as claimed in claim 4, characterized in that the second frequency band (FB₂) extends from approximately 470 to 500 MHz, the third frequency band (FB₃) extends from approximately 30 to 60 MHz, and that the subscriber-individual frequencies lying in these bands are approximately 30 KHz apart, and that the conversion of the subscriber-individual information signals to be transmitted into the frequency bands is carried out by a frequency modulation of the subscriber-individual frequencies.

6. A system as claimed in one of the preceding claims, characterized in that the means (40, 41, 42) for extracting the optical signal to be transmitted to the center (1) from the optical waveguide (LA₄) amplifying it, and reinjecting it into the optical waveguide (LA₄) are wavelength-selective optical-waveguide couplers (40, 42) and a fiber-optic amplifier (41) optimized for the wavelength (λ₂) of the optical signal to be amplified.

7. A system as claimed in one of claims 1 through 5, characterized in that the means (51, 53, 54, 52) for extracting the optical signal to be transmitted to the center from the optical waveguide (LA₄), amplifying it, and reinjecting it into the optical waveguide (LA₄) are a wavelength-selective pump coupler (51) associated with the fiber-optic amplifier (10) for the opposite direction, an optical-to-electric transducer (54) and the pump source (52) associated with the fiber-optic amplifier (10) for the opposite direction, and
that these means are interconnected in such a way that the optical signal to be amplified and transmitted to the center is fed from one port of the pump coupler (51) to the input of the optical-to-electric transducer (54), and that the electric output signal of said optical-to-electric transducer (54) modulates the pump light generated by the pump source (52).

8. A system as claimed in one of claims 1 through 5, characterized in that the means (51, 53, 54, 56, 58, 59) for extracting the optical signal to be transmitted to the center from the optical waveguide (LA₄), amplifying it, and reinjecting it into the optical waveguide are a wavelength-selective pump coupler (51) associated with the fiber-optic amplifier (10) for the opposite direction, an optical-to-electric transducer (54), an electric-to-optical transducer (56), and a wavelength-selective optical-waveguide coupler (LA₄) (59) which couples the optical output signal of the electric-to-optical transducer (56) into the optical wavequide (LA₄).

9. A system as claimed in one of claims 1, 2, 3, 6, 7, and 8, characterized in that the means for transmitting subscriber-individual information signals from the center to the subscribers and from the subscribers to the center include means (63, 73) for assigning to a subscriber (T₁), as required and on a subscriber individual basis one (fᵢ) out of n frequencies from the *second* frequency band (FB2'), one (fᵢ') out of n frequencies from the third frequency band (FB3'), where n is distinctly smaller than the number of subscribers.

10. A system according to claim 9, characterized in
that the means for transmitting subscriber-individual information signals include one modulator-demodulator pair (MZ₁, DZ₁) per subscriber at the center and one modulator-demodulator pair (MT₁, DT₁) at the subscriber (T₁);
that the frequency (fᵢ) assigned to a subscriber (Tᵢ) from the second frequency band (FB2') is the frequency of a carrier that is modulated by the modulator (MZ₁) at the center with the information signal to be transmitted to the subscriber and is received with this modulation and demodulated by the demodulator (DT₁) at the subscriber (T₁),
and that the frequency assigned to the subscriber (T₁) from the third frequency band (FB3') is the frequency of a carrier that is modulated by the modulator (MT₁) at the subscriber with the information signal to be transmitted to the center and is received with this modulation and demodulated by the demodulator (DZ₁) at the center.

11. A system as claimed in claim 10, characterized in that the means (63, 73) assigning the above-mentioned frequencies (fᵢ, fᵢ') select to a subscriber a frequency from the second frequency band (FB2') and a frequency from the third frequency band (FB3'), which differ from each other by a fixed preset amount.

12. A system as claimed in claim 11, characterized in that if it is the center from which a bidirectional communication between it and a subscriber (T₁) is initiated,
- a frequency control present in the center (63) searches along the said n frequencies of the second frequency band (FB2') for a frequency (fᵢ) not occupied by other subscribers and adjusts the modulator belonging to the subscriber in the center (MZ₁) to this frequency (f;) and adjusts the demodulator (DZ₁) belonging to the same subscriber in the center to a frequency from the third frequency band (FB3') differing from the frequency (Fᵢ) found for the modulator by the fixed preset amount, and
- if it is a subscriber who initiates a bidirectional communication between him and the center, a frequency control (73) present at the subscriber searches for a frequency (fᵢ') not occupied by other subscribers from among the said n frequencies of the third frequency band (FB3') and adjusts the modulator (MT₁) at the subscriber (T₁) to this frequency and adjusts the demodulator (DT₁) present at the same subscriber (T₁) to a frequency (Fᵢ) from the second frequency band (FB2') differing from the frequency (fᵢ') found for the modulator by the fixed preset amount, that
- the demodulators present per subscriber in the center (DZ₁ to DZ₁₀₀₀) and the demodulators present at the subscribers (DT₁) as long as a frequency has not been assigned to them, scan the frequency band provided for them, controlled by the respective frequency control, to determine whether one of the n frequencies is modulated with a ringing signal to the subscriber or from the subscriber and that the particular frequency control, if this is established for one of the frequencies, adjusts the demodulator to this frequency and adjusts the modulator of the same modulator-demodulator pair to a frequency from the other frequency band in each case, differing from the found frequency by the fixed preset amount.

13. A system as claimed in one of claims 9 through 12, characterized in that the second frequency band (FB2') is located above the third band (FB3') and the latter is located above the first frequency band (FB1 or FB1').

14. A system as claimed in claim 13, characterized in that the second frequency band (FB2') is, for example, a band of 920 to 960 MHz and the third frequency band (FB3') is, for example, a band of 880 to 920 MHz.

15. A system as claimed in one of claim 9 through 12, characterized in that the frequency control (63) present in the center modulates an additional frequency (fₒ) with information on the current occupancy of the n frequencies and that the signal thus formed is transmitted to all subscribers and that the frequency control present at the subscribers (73), as long as a subscriber has not occupied any frequency, receives this signal and uses it to search for an unoccupied frequency.

## Revendications

1. Système optique de télécommunication avec un central (1) et un grand nombre d'abonnés (Tᵢ), pour lequel les abonnés sont reliés au central (1) par l'intermédiaire d'un réseau de fibres optiques étoile-étoile (LAᵢ, LBᵢ, LCᵢ), comportant entre des points de dérivation successifs du réseau de fibres optiques des amplificateurs optiques (10, 11), dans lequel les signaux de communication, en particulier les signaux de télévision, à transmettre du central (1) aux abonnés (Tᵢ) sont convertis en une première bande de fréquences (FB1), sont transmis aux abonnés (Tᵢ), par l'intermédiaire du réseau de fibres optiques, le signal optique étant amplifié par les amplificateurs optiques (10, 11),
caractérisé par le fait que
des instruments sont disponibles pour transmettre du central vers les abonnés (Tᵢ) des signaux de communication individuels d'abonnés, en particulier des signaux de télévision, convertis en une deuxième bande de fréquences (FB2) avec des fréquences individuelles d'abonnés, comme signal optique avec une première longueur d'onde (λ₁), le signal optique étant amplifié par les amplificateurs optiques (10, 11),
des instruments sont disponibles pour transmettre des abonnés au central des signaux de communication individuels d'abonnés, en particulier des signaux de télévision, convertis en une troisième bande de fréquences (FB3) avec des fréquences individuelles d'abonnés, comme signal optique avec une deuxième longueur d'onde (λ₂), par l'intermédiaire du même réseau de fibres optiques, sans que le signal optique de la deuxième longueur d'onde soit amplifié par les amplificateurs optiques, et que des instruments (51-54) se trouvent à des endroits (A) du réseau de fibres optiques auxquels une amplification du signal optique de la deuxième longueur d'onde (λ₂) à transmettre au central afin de découpler le signal optique à transmettre de la fibre optique (LA₄), de l'amplifier et de l'injecter de nouveau dans la fibre optique (LA₄).

2. Système conformément à la revendication 1, caractérisé par le fait que le réseau de fibres optiques de forme étoile-étoile est dérivé dans le central (1) ou à proximité de ce dernier en plusieurs fibres optiques (LA₁ à LA₄), que chacune des fibres optiques est reliée à un séparateur de puissance (25) dont n fibres optiques (LB₁ à LB₁₆) partent, chacune de ces n fibres optiques (LB₁ à LB₁₆) conduisant à un séparateur de puissance (28) dont m fibres optiques (LC₁ à LC₁₆) conduisent chacune à un abonné (Tᵢ).

3. Système conformément à la revendication 1 ou 2, caractérisé par le fait que la première longueur d'onde (λ₁) est environ égale à 1550 nm, tandis que la deuxième longueur d'onde (λ₂) est environ égale à 1300 nm.

4. Système conformément à l'une des revendications 1 à 3, caractérisé par le fait que la deuxième bande de fréquences (FB₂) et la troisième bande de fréquences (FB₃) se trouvent l'une au-dessus et l'autre au-dessous de la première bande de fréquences (FB₁) .

5. Système conformément à la revendication 4, caractérisé par le fait que la deuxième bande de fréquences (FB₂) est une bande d'environ 470 à 600 MHz, tandis que la troisième bande de fréquences (FB₃) est une bande d'environ 30 à 60 MHz, et que les fréquences individuelles d'abonnés de ces bandes sont séparées d'environ 30 kHz l'une de l'autre, et que la conversion dans les bandes de fréquences des signaux de communication individuels des abonnés à transmettre se fait par modulation de fréquence des fréquences individuelles d'abonnés.

6. Système conformément à l'une des revendications précédentes, caractérisé par le fait que les instruments (40, 41, 42) utilisés afin de découpler de la fibre optique (LA₄) le signal optique à transmettre au central (1), de l'amplifier et de l'injecter de nouveau dans la fibre optique (LA₄) sont des coupleurs de fibres optiques (40, 42) à sélection de longueur d'onde et un amplificateur à fibres optiques (41) spécialement adapté à la longueur d'onde (λ₂) du signal optique à amplifier.

7. Système conformément à l'une des revendications 1 à 5, caractérisé par le fait que les instruments (51, 53, 54, 52) utilisés afin de découpler de la fibre optique (LA₄) le signal optique à transmettre au central (1), de l'amplifier et de l'injecter de nouveau dans la fibre optique (LA₄) sont un coupleur de lumière de pompage (51) à sélection de longueur d'onde appartenant à l'amplificateur à fibres optiques (10) pour le sens contraire, un convertisseur optique-électrique (54) et la source de lumière de pompage (52) appartenant à l'amplificateur à fibres optiques (10) pour le sens inverse,
et que ces instruments sont reliés l'un à l'autre de telle sorte que le signal optique à amplifier et à transmettre au central part d'un raccord du coupleur de lumière de pompage (51) et arrive à l'entrée du convertisseur optique-électrique (54), et le signal électrique de sortie de ce dernier module la lumière de pompage engendrée par la source de lumière de pompage (52).

8. Système conformément à l'une des revendications 1 à 5, caractérisé par le fait que les instruments (51, 53, 54, 56, 58, 59) utilisés afin de découpler de la fibre optique (LA₄) le signal optique à transmettre au central (1), de l'amplifier et de l'injecter de nouveau dans la fibre optique (LA4) sont un coupleur de lumière de pompage (51) à sélection de longueur d'onde appartenant à l'amplificateur à fibres optiques (10) pour le sens contraire, un convertisseur optique-électrique (54), un convertisseur électrique-optique (56) et un coupleur de lumière de pompage (59) à sélection de longueur d'onde injectant le signal optique de sortie de ce dernier dans la fibre optique (LA₄).

9. Système conformément à l'une des revendications 1, 2, 3, 6, 7 et 8, caractérisé par le fait que les instruments utilisés pour la transmission de signaux de communication individuels d'abonnés entre le central et les abonnés et vice versa contiennent des instruments (63, 73) qui ont pour fonction d'affecter en cas de besoin et individuellement à un abonné (T1) une fréquence (fᵢ) de n fréquences de la deuxième bande de fréquences (FB2') et une fréquence (fᵢ') de n fréquences de la troisième bande de fréquences (FB3'), le nombre n étant considérablement inférieur au nombre d'abonnés.

10. Système conformément à la revendication 9, caractérisé par le fait que
- les instruments utilisés pour la transmission de signaux de communication individuels d'abonnés contiennent pour chaque abonné une paire modulateur-démodulateur (MZ₁, DZ₁) dans le central, et une paire modulateur-démodulateur (MT₁, DT₁) chez l'abonné,
- la fréquence (fᵢ) de la deuxième bande de fréquences (FB2') affectée à un abonné (T₁) est la fréquence d'un porteur que le modulateur (MZ₁) module dans le central avec le signal de communication à transmettre à l'abonné, et que le démodulateur (DT₁) reçoit avec cette modulation chez l'abonné (T₁) et démodule, et que
- la fréquence de la troisième bande de fréquences (FB3') affectée à un abonné (T₁) est la fréquence d'un porteur que le modulateur (MT₁) module chez l'abonné avec le signal de communication à transmettre au central, et que le démodulateur (DZ₁) reçoit avec cette modulation dans le central et démodule.

11. Système conformément à la revendication 10, caractérisé par le fait que les instruments (63, 73) attribuant les fréquences mentionnées (fᵢ, fᵢ') à un abonné choisissent une fréquence de la deuxième bande de fréquences (FB2') et une fréquence de la troisième bande de fréquences (FB3'), lesquelles diffèrent l'une de l'autre d'une valeur fixe définie au préalable.

12. Système conformément à la revendication 11, caractérisé par le fait que
- dans le cas où c'est à partir du central qu'est initiée une transmission bidirectionnelle de messages entre lui-même et un abonné (T₁),
- une commande de fréquence (63) intégrée dans le central cherche parmi les n fréquences mentionnées ci-dessus de la deuxième bande de fréquences (FB2') une fréquence (fᵢ) non affectée à un autre abonné et ajuste le modulateur (MZ₁) intégré dans le central et appartenant à l'abonné sur cette fréquence (fᵢ), et le démodulateur (DZ₁) appartenant au même abonné sur une fréquence (fᵢ') de la troisième bande de fréquences (FB3') différant de la fréquence (fᵢ) d'une valeur fixe définie au préalable, et
- si une transmission bidirectionnelle de messages est initiée à partir de l'abonné entre ce dernier et le central,
- une commande de fréquence (73) chez l'abonné cherche parmi les n fréquences mentionnées ci-dessus de la troisième bande de fréquences (FB3') une fréquence (fᵢ') non affectée à un autre abonné et ajuste le modulateur (MT₁) appartenant à l'abonné (T₁) sur cette fréquence, et le démodulateur (DT₁) appartenant au même abonné (T₁) sur une fréquence (fᵢ) de la deuxième bande de fréquences (FB2') différant de la fréquence (fᵢ') d'une valeur fixe définie au préalable;
- et que les démodulateurs (DZ₁ à DZ₁₀₀₀) compris pour chaque abonné dans le central et les démodulateurs (DT₁) existant chez les abonnés balaie, tant qu'aucune fréquence ne leur est affectée, la bande de fréquences leur appartenant, commandés par la commande de fréquence correspondante, afin de découvrir si une des n fréquences est modulée avec un signal d'appel provenant de l'abonné auquel ils appartiennent ou un signal d'appel transmis à l'abonné auquel ils appartiennent, et que la commande de fréquence correspondante, si cela est constaté pour une des fréquences, ajuste le démodulateur sur cette fréquence et le modulateur de la même paire modulateur-démodulateur sur une fréquence de l'autre bande de fréquences différant de la fréquence trouvée d'une valeur fixe définie au préalable.

13. Système conformément à une des revendications 9 à 12, caractérisé par le fait que la deuxième bande de fréquences (FB2') se trouve au-dessus de la troisième (FB3'), et cette dernière au-dessus de la première bande de fréquences (FB1 ou FB1').

14. Système conformément à la revendication 13, caractérisé par le fait que la deuxième bande de fréquences (FB₂') est une bande d'environ 920 à 960 MHz, tandis que la troisième bande de fréquences (FB₃') est une bande d'environ 880 à 920 MHz.

15. Système conformément à une des revendications 9 à 12, caractérisé par le fait que la commande de fréquence (63) intégrée dans le central module une autre fréquence (f₀) avec des informations concernant l'affectation actuelle des n fréquences, et que le signal ainsi formé est transmis à tous les abonnés, et que la commande de fréquence (73) se trouvant chez les abonnés reçoit ce signal, tant qu'un abonné n'occupe pas une fréquence, et l'utilise pour la recherche d'une fréquence libre.
